# EUROPEAN PATENT APPLICATION

(11) **EP 4 333 180 A1**
(43) Date of publication of application: **06.03.2024**
(21) Application number: 22886888.1
(22) Date of filing: 21.10.2022
(51) Int. Cl.: H01M 50/253, H01M 8/00, H01M 8/04537, H01M 8/04858, H01M 10/052, H01M 4/485, H01M 8/12

(54) **COMPOSITE BATTERY, AND COMPOSITE BATTERY SYSTEM PROVIDED WITH SAME**

(30) Priority: 25.10.2021 JP 2021173562
(71) Applicant: Connexx Systems Corporation, Kyoto 619-0294 (JP)
(72) Inventor: TSUKAMOTO, Hisashi, Soraku-gun, Kyoto 619-0294 (JP)
(74) Representative: Cohausz & Florack
(86) International application number: PCT/JP2022/039276
(87) International publication number: WO 2023/074561

(57) **Abstract**

Provided are a composite battery that can maintain different operating temperatures of secondary batteries and accommodate variations in operating voltage caused by variations in environmental temperature, which are produced in an all-solid-state secondary battery, and a composite battery system including the composite battery. A composite battery 10 includes an all-solid-state secondary battery 12, a lithium ion secondary battery 14, an operating voltage holding device 16, and a housing 18. The all-solid-state secondary battery 12 operates under a predetermined temperature condition. The lithium ion secondary battery 14 is of a high-power type connected in parallel to the all-solid-state secondary battery 12. The operating voltage holding device 16 is for holding the operating voltage of the all-solid-state secondary battery 12 within a predetermined range. The housing 18 is formed of a heat-insulating member such that the inside of the housing 18 is thermally isolated from the outside of the housing 18. The all-solid-state secondary battery 12 is disposed inside the housing 18, and the lithium ion secondary battery 14 and the operating voltage holding device 16 are disposed outside the housing 18.

## Description

### Technical Field

The present invention relates to a composite battery in which different types of batteries are connected in parallel, and a composite battery system including the composite battery. More specifically, the present invention relates to a composite battery composed of an all-solid-state secondary battery and a lithium ion secondary battery, and a composite battery system including the composite battery.

### Background Art

In the related art, a composite battery is disclosed that includes a combination of two types of secondary batteries with different properties as a secondary battery that simultaneously meets a requirement for obtaining a high energy density while maintaining a high power density of a certain level or more and a requirement for obtaining a high power density while maintaining a high energy density of a certain level or more. For example, PTL 1 discloses a composite battery in which a large-capacity secondary battery and a high-power secondary battery having different open circuit voltages are connected in parallel.

On the other hand, fuel cells are means for causing a power generator to generate power by supplying a fuel gas. Of the fuel cells, a solid oxide fuel cell (SOFC) using an inorganic solid electrolyte having oxygen ion conductivity is known as a clean and highly efficient, excellent power generation device. In addition, a fuel cell system that has a mechanism for recovering a fuel gas consumed by discharge of a fuel cell and can be used as a secondary battery has been developed. For example, PTL 2 describes a simple and compact solid oxide fuel cell system configured to have a sufficiently large battery capacity and a sufficiently high energy density.

Accordingly, a fuel cell system is used as a large-capacity secondary battery of a composite battery, and a high-power lithium ion secondary battery is used as a high-power secondary battery of the composite battery. As a result, an excellent composite battery that is cleaner and has higher charge and discharge efficiency than in the related art can be achieved.

### Citation List

### Patent Literature

PTL 1: Japanese Patent No. 4082147
PTL 2: Japanese Patent No. 6767399

### Summary of Invention

### Technical Problem

However, the large-capacity secondary battery and the high-power secondary battery of the composite battery in PTL 1 have the same operating temperature at approximately room temperature, whereas the fuel cell system in PTL 2 has a high operating temperature. Thus, when the high-power secondary battery in PTL 1 and the fuel cell system in PTL 2 are combined to achieve a composite battery, a problem arises that no consideration is given to the need to install the high-power secondary battery and the fuel cell system in different temperature environments to maintain the respective different operating temperatures of the secondary batteries.

In addition, the large-capacity secondary battery and the high-power secondary battery of the composite battery in PTL 1 exhibit relatively small variations in operating voltage even when the environmental temperature varies, whereas the fuel cell system in PTL 2 exhibits relatively large variations in operating voltage when the environmental temperature varies. Another problem is that no consideration is given to the need to accommodate the variations.

The present invention has been made in view of such problems in the related art, and has an object to provide a composite battery capable of maintaining different operating temperatures of secondary batteries and accommodating variations in operating voltage caused by variations in environmental temperature, which are produced in a fuel cell system, that is, an all-solid-state secondary battery of the present invention.

In addition to the object described above, the present invention has another object to provide a composite battery in which an all-solid-state secondary battery can be operated continuously for a certain period of time as long as or longer than in the related art and that can be constructed in a simple manner and can have increased applicability.

In addition to the objects described above, the present invention has still another object to provide a composite battery system that can enhance the thermal efficiency, power self-sufficiency, and capacity utilization of the entire system and increase the battery capacity of the entire system to a level equal to or higher than in the related art.

### Solution to Problem

To achieve the objects described above, the inventor of the present invention has made intensive studies and, as a result, found that, first, a fuel cell system, that is, an all-solid-state secondary battery of the present invention, is disposed inside a housing formed of a heat-insulating member and a high-power secondary battery, that is, a lithium ion secondary battery of the present invention, is disposed outside the housing, whereby respective different operating temperatures of the secondary batteries can be maintained.

The inventor of the present invention has also found that an operating voltage holding device for holding an operating voltage of the all-solid-state secondary battery within a predetermined range, such as a voltage control device, a temperature control device, or an air flow rate control device, for example, is disposed, whereby variations in operating voltage caused by variations in environmental temperature, which are produced in the all-solid-state secondary battery, can be accommodated. Based on these findings, the inventor has completed the present invention.

That is, a first embodiment of the present invention provides a composite battery including an all-solid-state secondary battery that operates under a predetermined temperature condition, a high-power lithium ion secondary battery connected in parallel to the all-solid-state secondary battery, an operating voltage holding device for holding an operating voltage of the all-solid-state secondary battery within a predetermined range, and a housing formed of a heat-insulating member such that an inside of the housing is thermally isolated from an outside of the housing, wherein the all-solid-state secondary battery is disposed inside the housing and is configured such that, in response to charging power being supplied from outside, a reduction reaction of iron occurs and oxygen is released from the all-solid-state secondary battery to outside and such that, in response to supply of the charging power being stopped and oxygen being supplied from outside, an oxidation reaction of iron occurs and power is supplied from the all-solid-state secondary battery to outside, and the lithium ion secondary battery and the operating voltage holding device are disposed outside the housing.

In the composite battery described above, preferably, the operating voltage holding device is a voltage control device connected in series to the all-solid-state secondary battery, and the voltage control device performs control such that the operating voltage of the all-solid-state secondary battery is held within an operating voltage range of the lithium ion secondary battery.

Preferably, the operating voltage holding device is a temperature control device that controls a temperature of the all-solid-state secondary battery within a range of the predetermined temperature condition, and the temperature control device performs control such that the operating voltage of the all-solid-state secondary battery is held within an operating voltage range of the lithium ion secondary battery.

Preferably, the operating voltage holding device is an air flow rate control device that controls a flow rate of air to be supplied to the all-solid-state secondary battery, and the air flow rate control device performs control such that the operating voltage of the all-solid-state secondary battery is held within an operating voltage range of the lithium ion secondary battery.

In the composite battery described above, furthermore, preferably, the all-solid-state secondary battery includes a plate-shaped electrode assembly including a fuel electrode that oxidizes hydrogen gas into water vapor during discharging, and a negative electrode fuel material body that reacts with the water vapor to generate the hydrogen gas and becomes an oxide, the electrode assembly is heated to and maintained at 450 to 1000°C, and the negative electrode fuel material body is heated to and maintained at 300 to 1000°C.

The lithium ion secondary battery is preferably a lithium ion secondary battery using a lithium metal oxide as a positive electrode material and lithium titanate as a negative electrode material, or a lithium ion secondary battery using a lithium metal oxide as a positive electrode material and a graphite-based carbon material as a negative electrode material.

A second embodiment of the present invention provides a composite battery system including a power generation device that converts energy into DC power and outputs the DC power, the composite battery according to the first embodiment of the present invention that is directly connected to a power line of the power generation device and is to be charged with DC power generated by the power generation device, a power control system that converts the DC power generated by the power generation device and DC power discharged from the composite battery into AC power and supplies the AC power to a load, and a control device that controls charging and discharging of the composite battery in accordance with an amount of power generated by the power generation device and an amount demanded by the load, wherein the power generation device, the power control system, and the control device are disposed outside the housing.

In the composite battery system described above, preferably, the power generation device is one selected from the group consisting of an internal combustion engine power generation device, a boiler power generation device, and a fuel cell power generation device, and the all-solid-state secondary battery of the composite battery is heated and maintained by using thermal energy of a fluid released from the power generation device.

Preferably, the control device performs control such that when the amount of power generated by the power generation device is larger than the amount demanded by the load, the amount demanded by the load is supplied to the load and the composite battery is charged with a surplus of the amount of power generated by the power generation device and such that when the amount of power generated by the power generation device is smaller than the amount demanded by the load, the amount of power generated by the power generation device is supplied to the load and a deficit in the amount demanded by the load is discharged from the composite battery.

Preferably, the composite battery system described above further includes a charger disposed outside the housing and having one end connected to the power line of the power generation device and another end connected to a grid via a charging switch, and when the charging switch is in a charging position, the composite battery is charged with output power of the charger generated by power of the grid.

Preferably, the composite battery system further includes a bidirectional DC-DC converter disposed outside the housing and having one end connected to the power line of the power generation device and another end connectable to an in-vehicle secondary battery mounted in an electric vehicle, and the in-vehicle secondary battery has a function of being charged with the DC power generated by the power generation device and with the output power of the charger generated by the power of the grid, and a function of discharging power with which the in-vehicle secondary battery is charged to the power control system.

Preferably, the composite battery system further includes a non-linkage switch that is disposed between a grid and the load and breaks linkage with the grid, and when the non-linkage switch is in a non-linkage position, the control device performs control such that a demand of the load is satisfied with power generated by the power generation device and power charged in the composite battery.

### Advantageous Effects of Invention

The composite battery according to the first embodiment of the present invention can maintain the respective different operating temperatures of the secondary batteries and accommodate variations in operating voltage caused by variations in environmental temperature, which are produced in the all-solid-state secondary battery.

In addition to the effects described above, in the composite battery according to the first embodiment of the present invention, the all-solid-state secondary battery can be operated continuously for a certain period of time as long as or longer than in the related art, and the composite battery can be constructed in a simple manner and can have increased applicability.

In addition to the effects described above, the composite battery system of the second embodiment of the present invention can enhance the thermal efficiency, power self-sufficiency, and capacity utilization of the entire system and increase the battery capacity of the entire system to a level equal to or higher than in the related art.

### Brief Description of Drawings

[Fig. 1] Fig. 1 is a block diagram illustrating a composite battery of the present invention and a composite battery system including the same.
[Fig. 2] Fig. 2 is a sectional view schematically illustrating an all-solid-state secondary battery included in the composite battery illustrated in Fig. 1.

### Description of Embodiments

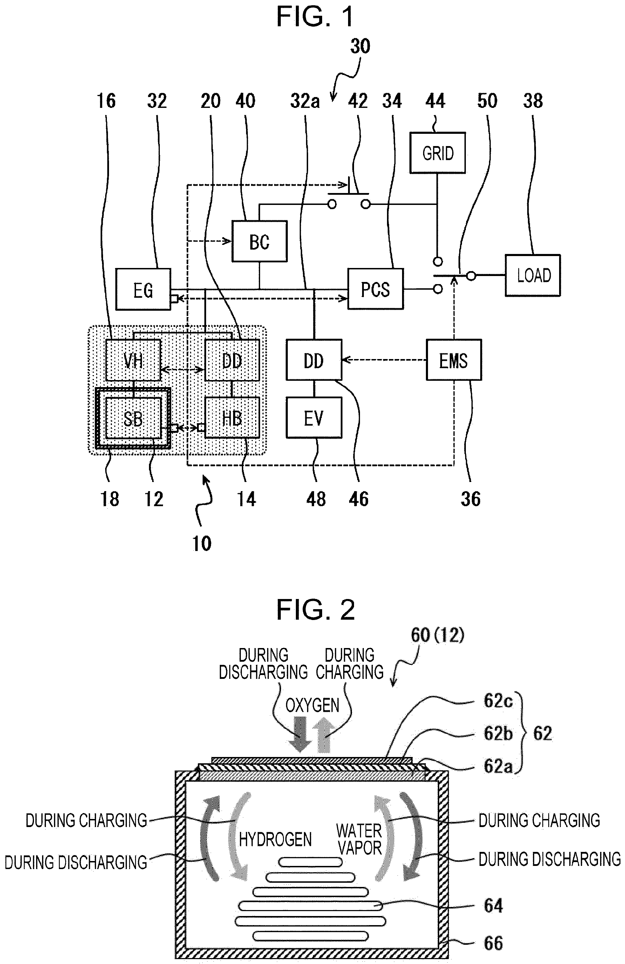

Hereinafter, the present invention will be described in detail based on preferred embodiments illustrated in the accompanying drawings. First, a composite battery according to a first embodiment of the present invention will be described in detail. Fig. 1 is a block diagram illustrating a composite battery of the present invention and a composite battery system including the same, and Fig. 2 is a sectional view schematically illustrating an all-solid-state secondary battery included in the composite battery illustrated in Fig. 1.

A composite battery 10 of the present invention includes an all-solid-state secondary battery 12, a lithium ion secondary battery 14, an operating voltage holding device 16, and a housing 18. The all-solid-state secondary battery 12 operates under a predetermined temperature condition. The lithium ion secondary battery 14 is of a high-power type connected in parallel to the all-solid-state secondary battery 12. The operating voltage holding device 16 is for holding the operating voltage of the all-solid-state secondary battery 12 within a predetermined range. The housing 18 is formed of a heat-insulating member such that the inside of the housing 18 is thermally isolated from the outside of the housing 18. The all-solid-state secondary battery 12 is configured such that, in response to the charging power being supplied from outside, the reduction reaction of iron occurs and oxygen is released from the all-solid-state secondary battery 12 to outside and such that, in response to the supply of the charging power being stopped and oxygen being supplied from outside, the oxidation reaction of iron occurs and power is supplied from the all-solid-state secondary battery 12 to outside. The all-solid-state secondary battery 12 is disposed inside the housing 18, and the lithium ion secondary battery 14 and the operating voltage holding device 16 are disposed outside the housing 18.

Preferably, the composite battery 10 further includes a bidirectional DC-DC converter 20. In this case, the bidirectional DC-DC converter 20 is disposed outside the housing 18 and is connected in series to the lithium ion secondary battery 14. In Fig. 1, the operating voltage holding device 16 is illustrated at a position where the operating voltage holding device 16 is connected in series to the all-solid-state secondary battery 12. However, the illustrated position indicates a functional position for holding the operating voltage of the all-solid-state secondary battery 12 within a predetermined range, and does not indicate a physical position.

The all-solid-state secondary battery 12 is connected to an external control device such as a control device 36 described below via a control unit (BMS) of the all-solid-state secondary battery 12, and the control unit controls the charge and discharge state of the all-solid-state secondary battery 12 in accordance with an instruction from the external control device. The lithium ion secondary battery 14 is connected to the external control device via a control unit (BMS) of the lithium ion secondary battery 14, and the control unit controls the charge and discharge state of the lithium ion secondary battery 14 in accordance with an instruction from the external control device. The operating voltage holding device 16 is connected to the external control device and controls the operating voltage of the all-solid-state secondary battery 12 in accordance with an instruction from the external control device. The bidirectional DC-DC converter 20 is connected to the external control device and controls the charge and discharge state of the lithium ion secondary battery 14 in accordance with an instruction from the external control device.

This configuration enables the composite battery according to the first embodiment of the present invention to maintain the respective different operating temperatures of the secondary batteries and to accommodate variations in operating voltage caused by variations in environmental temperature, which are produced in the all-solid-state secondary battery.

Next, the all-solid-state secondary battery included in the composite battery of the present invention will be described.

An all-solid-state secondary battery 60 (12) preferably includes a plate-shaped electrode assembly 62 and a negative electrode fuel material body 64. In this case, the electrode assembly 62 includes a fuel electrode 62a (also referred to as a negative electrode or an anode layer). The fuel electrode 62a oxidizes hydrogen gas into water vapor during discharging. The negative electrode fuel material body 64 reacts with the water vapor to generate the hydrogen gas, and becomes an oxide. The electrode assembly 62 and the negative electrode fuel material body 64 are heated to and maintained at respective predetermined temperatures.

The electrode assembly 62 may further include a solid electrolyte body 62b and an air electrode 62c (also referred to as a positive electrode or a cathode layer). In this case, the solid electrolyte body 62b is disposed on one surface of the fuel electrode 62a and conducts oxygen ions during charging and discharging. The air electrode 62c is disposed on the surface of the solid electrolyte body 62b opposite to the surface adjacent to the fuel electrode 62a, and reduces oxygen in the air to oxygen ions during discharging.

The negative electrode fuel material body 64 is preferably in the form of a pellet composed of iron particles or iron powder and a shape-retaining material. The shape-retaining material is a sintering-resistant material or a mixture thereof. Examples of the sintering-resistant material include aluminum oxide, silicon dioxide, magnesium oxide, and zirconium oxide. At least a portion of the surface of the negative electrode fuel material body 64 is covered with a shape-retaining material. The mass ratio of the shape-retaining material to the negative electrode fuel material body 64 is 0.1% or more and 5% or less. When the mass ratio is less than 0.1%, it is likely that the surface of the negative electrode fuel material body 64 is sintered and no oxidation-reduction reaction occurs. When the mass ratio is more than 5%, it is likely that the oxidation-reduction rate is excessively suppressed. The pellet has a diameter of 2 to 10 mm, for example.

The predetermined temperature for the electrode assembly 62 may be 450 to 1000°C, and the predetermined temperature for the negative electrode fuel material body 64 may be 300 to 1000°C. That is, when the temperature of the electrode assembly 62 is less than 450°C or the temperature of the negative electrode fuel material body 64 is less than 300°C, it is likely that the all-solid-state secondary battery 60 does not operate. When the temperature of the electrode assembly 62 is more than 1000°C or the temperature of the negative electrode fuel material body 64 is more than 1000°C, it is likely that a decrease in power output may occur due to aggregation of the negative electrode fuel material body 64.

With this configuration, the composite battery according to the first embodiment of the present invention satisfies a temperature condition necessary for stable operation, and thus the all-solid-state secondary battery can be operated continuously for a certain period of time.

The electrode assembly 62 and the negative electrode fuel material body 64 may be each disposed in one of two sealed containers connected to each other by a gas pipe or a gas flow path, but are preferably disposed in a single sealed container 66 without the intervention of a gas pipe or a gas flow path. In this case, the sealed container 66 has an opening. The electrode assembly 62 is fixed to the opening via a sealing material, and the negative electrode fuel material body 64 is housed in the sealed container 66.

With this configuration, the composite battery according to the first embodiment of the present invention can be constructed in a simple manner.

Next, the high-power lithium ion secondary battery included in the composite battery of the present invention will be described.

The lithium ion secondary battery 14 may be an LTO-based lithium ion secondary battery using a lithium metal oxide as a positive electrode material and using lithium titanate as a negative electrode material. Alternatively, the lithium ion secondary battery 14 may be an NCM-based lithium ion secondary battery using a lithium metal oxide as a positive electrode material and a graphite-based carbon material as a negative electrode material.

Specifically, the LTO-based lithium ion secondary battery uses any one of lithium metal oxides such as LiNiO₂, LiCoO₂, LiMn₂O₄, and LiNiCoMnO₂ as a positive electrode material, and uses LTO, that is, lithium titanate (Li₄Ti₅O₁₂), as a negative electrode material. The NCM-based lithium ion secondary battery uses any one of ternary materials, that is, lithium metal oxides such as LiNiO₂, LiCoO₂, LiMn₂O₄, and LiNiCoMnO₂ as a positive electrode material, and a graphite-based carbon material such as graphite as a negative electrode material.

With this configuration, the composite battery according to the first embodiment of the present invention can also support the high power output demand and can thus have increased applicability.

Next, an example of the operating voltage holding device included in the composite battery of the present invention will be described.

The operating voltage holding device 16 may be a voltage control device. In this case, the voltage control device is connected in series to the all-solid-state secondary battery 12. The voltage control device performs control such that the operating voltage of the all-solid-state secondary battery 12 is held within an operating voltage range of the lithium ion secondary battery 14.

For example, when the operating voltage of the all-solid-state secondary battery 12 is higher than the operating voltage range of the lithium ion secondary battery 14, the voltage control device can directly control the operating voltage of the all-solid-state secondary battery 12 by stepping down the operating voltage of the all-solid-state secondary battery 12 by using, for example, the bidirectional DC-DC converter such that the operating voltage of the all-solid-state secondary battery 12 falls within the operating voltage range of the lithium ion secondary battery 14.

When the operating voltage of the all-solid-state secondary battery 12 is lower than the operating voltage range of the lithium ion secondary battery 14, the voltage control device can directly control the operating voltage of the all-solid-state secondary battery 12 by boosting the operating voltage of the all-solid-state secondary battery 12 by using, for example, the bidirectional DC-DC converter such that the operating voltage of the all-solid-state secondary battery 12 falls within the operating voltage range of the lithium ion secondary battery 14.

With this configuration, the composite battery according to the first embodiment of the present invention further ensures that variations in operating voltage caused by variations in environmental temperature, which are produced in the all-solid-state secondary battery, can be accommodated, since the voltage control device directly controls the operating voltage of the all-solid-state secondary battery.

Next, another example of the operating voltage holding device included in the composite battery of the present invention will be described.

The operating voltage holding device 16 may be a temperature control device. In this case, the temperature control device controls the temperature of the all-solid-state secondary battery 12 within a range of a predetermined temperature condition. The temperature control device performs control such that the operating voltage of the all-solid-state secondary battery 12 is held within an operating voltage range of the lithium ion secondary battery 14.

For example, when the operating voltage of the all-solid-state secondary battery 12 is higher than the operating voltage range of the lithium ion secondary battery 14, for example, the temperature control device reduces the temperature of the air flowing into the all-solid-state secondary battery 12, stops the heater heating the all-solid-state secondary battery 12, or uses any other method to reduce the temperature of the all-solid-state secondary battery 12. The reduction in temperature leads to a decrease in the operating voltage of the all-solid-state secondary battery 12. Therefore, the temperature control device can indirectly control the operating voltage of the all-solid-state secondary battery 12 such that the operating voltage of the all-solid-state secondary battery 12 falls within the operating voltage range of the lithium ion secondary battery 14.

When the operating voltage of the all-solid-state secondary battery 12 is lower than the operating voltage range of the lithium ion secondary battery 14, for example, the temperature control device increases the temperature of the air flowing into the all-solid-state secondary battery 12, turns on the heater to heat the all-solid-state secondary battery 12, or uses any other method to increase the temperature of the all-solid-state secondary battery 12. The increase in temperature leads to an increase in the operating voltage of the all-solid-state secondary battery 12. Therefore, the temperature control device can indirectly control the operating voltage of the all-solid-state secondary battery 12 such that the operating voltage of the all-solid-state secondary battery 12 falls within the operating voltage range of the lithium ion secondary battery 14. The temperature control device may include a function of a temperature management unit (not illustrated) that heats the all-solid-state secondary battery 12 to a predetermined temperature and maintains the all-solid-state secondary battery 12 at the predetermined temperature, which is required to operate the all-solid-state secondary battery 12. Alternatively, such a required function may be provided separately from the temperature control device without being included in the temperature control device.

With this configuration, the composite battery according to the first embodiment of the present invention ensures that variations in operating voltage caused by variations in environmental temperature, which are produced in the all-solid-state secondary battery, can be accommodated, since the temperature control device indirectly controls the operating voltage of the all-solid-state secondary battery.

Next, still another example of the operating voltage holding device included in the composite battery of the present invention will be described.

The operating voltage holding device 16 may be an air flow rate control device. In this case, the air flow rate control device controls the flow rate of air to be supplied to the all-solid-state secondary battery 12. The air flow rate control device performs control such that the operating voltage of the all-solid-state secondary battery 12 is held within an operating voltage range of the lithium ion secondary battery 14.

For example, when the operating voltage of the all-solid-state secondary battery 12 is higher than the operating voltage range of the lithium ion secondary battery 14, a different method is used depending on the temperature of the air to be supplied to the all-solid-state secondary battery 12 by the air flow rate control device. If the temperature of the air to be supplied to the all-solid-state secondary battery 12 is higher than the temperature to which the all-solid-state secondary battery 12 is heated and at which the all-solid-state secondary battery 12 is maintained, the air flow rate control device decreases the flow rate of the air to be supplied to the all-solid-state secondary battery 12, or otherwise, the air flow rate control device increases the flow rate of the air to be supplied to the all-solid-state secondary battery 12. The change in the air flow rate leads to a decrease in the temperature of the all-solid-state secondary battery 12, resulting in a decrease in the operating voltage of the all-solid-state secondary battery 12. Therefore, the air flow rate control device can indirectly control the operating voltage of the all-solid-state secondary battery 12 such that the operating voltage of the all-solid-state secondary battery 12 falls within the operating voltage range of the lithium ion secondary battery 14.

When the operating voltage of the all-solid-state secondary battery 12 is lower than the operating voltage range of the lithium ion secondary battery 14, a different method is used depending on the temperature of the air to be supplied to the all-solid-state secondary battery 12 by the air flow rate control device. If the temperature of the air to be supplied to the all-solid-state secondary battery 12 is higher than the temperature to which the all-solid-state secondary battery 12 is heated and at which the all-solid-state secondary battery 12 is maintained, the air flow rate control device increases the flow rate of the air to be supplied to the all-solid-state secondary battery 12, or otherwise, the air flow rate control device decreases the flow rate of the air to be supplied to the all-solid-state secondary battery 12. The change in the air flow rate leads to an increase in the temperature of the all-solid-state secondary battery 12, resulting in an increase in the operating voltage of the all-solid-state secondary battery 12. Therefore, the air flow rate control device can indirectly control the operating voltage of the all-solid-state secondary battery 12 such that the operating voltage of the all-solid-state secondary battery 12 falls within the operating voltage range of the lithium ion secondary battery 14.

With this configuration, the composite battery according to the first embodiment of the present invention ensures that variations in operating voltage caused by variations in environmental temperature, which are produced in the all-solid-state secondary battery, can be accommodated, since the air flow rate control device indirectly controls the operating voltage of the all-solid-state secondary battery.

The composite battery according to the first embodiment of the present invention is basically configured as described above.

Next, a composite battery system according to a second embodiment of the present invention will be described in detail.

A composite battery system 30 of the present invention includes a power generation device 32, the composite battery 10, a power control system 34, and the control device 36. The power generation device 32 converts energy into DC power and outputs the DC power. The composite battery 10 is directly connected to a power line 32a of the power generation device 32, and is charged with the DC power generated by the power generation device 32. The power control system 34 converts the DC power generated by the power generation device 32 and DC power discharged from the composite battery 10 into AC power, and supplies the AC power to a load 38. The control device 36 controls the charging and discharging of the composite battery 10 in accordance with the amount of power generated by the power generation device 32 and the amount demanded by the load 38. The power generation device 32, the power control system 34, and the control device 36 are disposed outside the housing 18.

The power generation device 32 is connected to the control device 36 via a control unit of the power generation device 32, and the control unit controls the state of the power generated by the power generation device 32 in accordance with an instruction from the control device 36. The power control system 34 is connected to the control device 36 and controls the amount of power to be supplied to the load 38 in accordance with an instruction from the control device 36.

This configuration enables the composite battery system according to the second embodiment of the present invention to maintain the respective different operating temperatures of the secondary batteries and to accommodate variations in operating voltage caused by variations in environmental temperature, which are produced in the all-solid-state secondary battery.

Next, the power generation device included in the composite battery system of the present invention will be described.

The power generation device 32 is preferably one selected from the group consisting of an internal combustion engine power generation device, a boiler power generation device, and a fuel cell power generation device. In this case, the all-solid-state secondary battery 12 of the composite battery 10 is heated and maintained by using the thermal energy of the fluid released from the power generation device 32.

The internal combustion engine power generation device is a power generation device that operates an internal combustion engine by, for example, using bioethanol as fuel and rotates a crankshaft of the engine to generate power. The boiler power generation device is a power generation device that uses, for example, exhaust heat during incineration of combustible waste (combustible refuse) to generate high-temperature steam in a boiler and rotates a turbine with the steam to generate power. The fuel cell power generation device is a power generation device in which, for example, hydrogen is supplied as fuel and undergoes an electrochemical reaction with oxygen to generate electric energy, which is extracted. Among them, a molten carbonate fuel cell (MCFC) using a molten carbonate as an electrolyte material has an operating temperature of 600 to 700°C, and a solid oxide fuel cell (SOFC) using a zirconia-based ceramic as an electrolyte material has an operating temperature of 700 to 1000°C.

With this configuration, the composite battery system according to the second embodiment of the present invention uses the thermal energy of the fluid released from the power generation device and thus can enhance the thermal efficiency of the entire system.

Next, the control device included in the composite battery system of the present invention will be described.

When the amount of power generated by the power generation device 32 is larger than the amount demanded by the load 38, the control device 36 preferably performs control such that the amount demanded by the load 38 is supplied to the load 38 and the composite battery 10 is charged with the surplus of the power generated by the power generation device 32. Conversely, when the amount of power generated by the power generation device 32 is smaller than the amount demanded by the load 38, the control device 36 preferably performs control such that the amount of power generated by the power generation device 32 is supplied to the load 38 and the deficit in the amount demanded by the load 38 is discharged from the composite battery 10.

For example, when the amount of power generated by the power generation device 32 is 1 kW and the amount demanded by the load 38 is 0.7 kW, the control device 36 performs control such that 0.7 kW, which is the amount demanded by the load 38, is supplied to the load 38 and the composite battery 10 is charged with a surplus of 0.3 kW of 1 kW, which is the amount of power generated by the power generation device 32. Conversely, when the amount of power generated by the power generation device 32 is 0.7 kW and the amount demanded by the load 38 is 1 kW, the control device 36 performs control such that 0.7 kW, which is the amount of power generated by the power generation device 32, is supplied to the load 38 and a deficit of 0.3 kW in 1 kW, which is the amount demanded by the load 38, is discharged from the composite battery 10.

With this configuration, the composite battery system according to the second embodiment of the present invention can enhance the power self-sufficiency of the entire system, since all of the power generated by the power generation device is finally supplied to the load.

Next, a charger and a charging switch that are included in the composite battery system of the present invention will be described.

Preferably, the composite battery system 30 further includes a charger 40. In this case, the charger 40 is disposed outside the housing 18. The charger 40 has one end connected to the power line 32a of the power generation device 32. The charger 40 has another end connected to a grid 44 via a charging switch 42. When the charging switch 42 is in a charging position, the composite battery 10 is charged with the output power of the charger 40 generated by the power of the grid 44. The charger 40 is connected to the control device 36 and controls a charging voltage and a charging current of the power of the grid 44 in accordance with an instruction from the control device 36. The charging switch 42 is connected to the control device 36 and is opened or closed in accordance with an instruction from the control device 36.

With this configuration, the composite battery system according to the second embodiment of the present invention can enhance the capacity utilization of the entire system, since the composite battery can be charged with not only the power generated by the power generation device but also the power of the grid.

Next, a bidirectional DC-DC converter included in the composite battery system of the present invention and an in-vehicle secondary battery of an electric vehicle will be described.

Preferably, the composite battery system 30 further includes a bidirectional DC-DC converter 46. In this case, the bidirectional DC-DC converter 46 is disposed outside the housing 18. The bidirectional DC-DC converter 46 has one end connected to the power line 32a of the power generation device 32. The bidirectional DC-DC converter 46 has another end connectable to an in-vehicle secondary battery 48 mounted in an electric vehicle. The in-vehicle secondary battery 48 has a function of being charged with the DC power generated by the power generation device 32 and with the output power of the charger 40 generated by the power of the grid 44, and a function of discharging the power with which the in-vehicle secondary battery 48 is charged to the power control system 34. The bidirectional DC-DC converter 46 is connected to the control device 36 and controls the charge and discharge state of the in-vehicle secondary battery 48 in accordance with an instruction from the control device 36.

With this configuration, the composite battery system according to the second embodiment of the present invention can increase the battery capacity of the entire system, since the in-vehicle secondary battery also has the same functions as those of the composite battery.

Next, a non-linkage switch included in the composite battery system of the present invention will be described.

Preferably, the composite battery system 30 further includes a non-linkage switch 50. In this case, the non-linkage switch 50 is disposed between the grid 44 and the load 38 and breaks the linkage with the grid 44. When the non-linkage switch 50 is in a non-linkage position, the control device 36 performs control such that the demand of the load 38 is satisfied with the power generated by the power generation device 32 and the power charged in the composite battery 10. The non-linkage switch 50 is connected to the control device 36 and switches the source from which output power is to be supplied to the load 38 between the power control system 34 and the grid 44 in accordance with an instruction from the control device 36.

Specifically, as described above, for example, when the amount of power generated by the power generation device 32 is 1 kW and the amount demanded by the load 38 is 0.7 kW, the control device 36 performs control such that 0.7 kW, which is the amount demanded by the load 38, is supplied to the load 38 and the composite battery 10 is charged with a surplus of 0.3 kW of 1 kW, which is the amount of power generated by the power generation device 32. When the amount of power generated by the power generation device 32 is 0.7 kW and the amount demanded by the load 38 is 1 kW, the control device 36 performs control such that 0.7 kW, which is the amount of power generated by the power generation device 32, is supplied to the load 38 and a deficit of 0.3 kW in 1 kW, which is the amount demanded by the load 38, is discharged from the composite battery 10.

With this configuration, the composite battery system according to the second embodiment of the present invention can enhance the power self-sufficiency of the entire system, since the power of the grid does not flow directly to the load.

The composite battery system according to the second embodiment of the present invention is basically configured as described above.

While a composite battery of the present invention and a composite battery system including the same have been described in detail, it should be understood that the present invention is not limited to the foregoing description and may be variously improved and modified without departing from the scope of the present invention.

### Industrial Applicability

The composite battery according to the first embodiment of the present invention has effects that can maintain the respective different operating temperatures of the secondary batteries and accommodate variations in operating voltage caused by variations in environmental temperature, which are produced in the all-solid-state secondary battery, and, in addition, also has effects that can operate the all-solid-state secondary battery continuously for a certain period of time as long as or longer than in the related art and provide a simple configuration and increased applicability to the composite battery. In addition to the effects described above, the composite battery system according to the second embodiment of the present invention has effects that can enhance the thermal efficiency, power self-sufficiency, and capacity utilization of the entire system and increase the battery capacity of the entire system to a level equal to or higher than in the related art, and is thus industrially useful.

### Reference Signs List

- 10: composite battery
- 12, 60: all-solid-state secondary battery
- 14: lithium ion secondary battery
- 16: operating voltage holding device
- 18: housing
- 20, 46: bidirectional DC-DC converter
- 30: composite battery system
- 32: power generation device
- 32a: power line
- 34: power control system
- 36: control device
- 38: load
- 40: charger
- 42: charging switch
- 44: grid
- 48: in-vehicle secondary battery
- 50: non-linkage switch
- 62: electrode assembly
- 62a: fuel electrode
- 62b: solid electrolyte body
- 62c: air electrode
- 64: negative electrode fuel material body
- 66: sealed container

## Claims

1. A composite battery comprising:
an all-solid-state secondary battery that operates under a predetermined temperature condition;
a high-power lithium ion secondary battery connected in parallel to the all-solid-state secondary battery;
an operating voltage holding device for holding an operating voltage of the all-solid-state secondary battery within a predetermined range; and
a housing formed of a heat-insulating member such that an inside of the housing is thermally isolated from an outside of the housing, wherein
the all-solid-state secondary battery is disposed inside the housing and is configured such that, in response to charging power being supplied from outside, a reduction reaction of iron occurs and oxygen is released from the all-solid-state secondary battery to outside and such that, in response to supply of the charging power being stopped and oxygen being supplied from outside, an oxidation reaction of iron occurs and power is supplied from the all-solid-state secondary battery to outside, and
the lithium ion secondary battery and the operating voltage holding device are disposed outside the housing.

2. The composite battery according to claim 1, wherein the operating voltage holding device is a voltage control device connected in series to the all-solid-state secondary battery, and the voltage control device performs control such that the operating voltage of the all-solid-state secondary battery is held within an operating voltage range of the lithium ion secondary battery.

3. The composite battery according to claim 1, wherein the operating voltage holding device is a temperature control device that controls a temperature of the all-solid-state secondary battery within a range of the predetermined temperature condition, and the temperature control device performs control such that the operating voltage of the all-solid-state secondary battery is held within an operating voltage range of the lithium ion secondary battery.

4. The composite battery according to claim 1, wherein the operating voltage holding device is an air flow rate control device that controls a flow rate of air to be supplied to the all-solid-state secondary battery, and the air flow rate control device performs control such that the operating voltage of the all-solid-state secondary battery is held within an operating voltage range of the lithium ion secondary battery.

5. The composite battery according to any one of claims 1 to 4, wherein
the all-solid-state secondary battery includes a plate-shaped electrode assembly including a fuel electrode that oxidizes hydrogen gas into water vapor during discharging, and a negative electrode fuel material body that reacts with the water vapor to generate the hydrogen gas and becomes an oxide,
the electrode assembly is heated to and maintained at 450 to 1000°C, and
the negative electrode fuel material body is heated to and maintained at 300 to 1000°C.

6. The composite battery according to any one of claims 1 to 4, wherein the lithium ion secondary battery is a lithium ion secondary battery using a lithium metal oxide as a positive electrode material and lithium titanate as a negative electrode material, or a lithium ion secondary battery using a lithium metal oxide as a positive electrode material and a graphite-based carbon material as a negative electrode material.

7. A composite battery system comprising:
a power generation device that converts energy into DC power and outputs the DC power;
the composite battery according to claim 1 that is directly connected to a power line of the power generation device and is to be charged with DC power generated by the power generation device;
a power control system that converts the DC power generated by the power generation device and DC power discharged from the composite battery into AC power and supplies the AC power to a load; and
a control device that controls charging and discharging of the composite battery in accordance with an amount of power generated by the power generation device and an amount demanded by the load, wherein
the power generation device, the power control system, and the control device are disposed outside the housing.

8. The composite battery system according to claim 7, wherein
the power generation device is one selected from the group consisting of an internal combustion engine power generation device, a boiler power generation device, and a fuel cell power generation device, and
the all-solid-state secondary battery of the composite battery is heated and maintained by using thermal energy of a fluid released from the power generation device.

9. The composite battery system according to claim 7 or 8, wherein the control device performs control such that when the amount of power generated by the power generation device is larger than the amount demanded by the load, the amount demanded by the load is supplied to the load and the composite battery is charged with a surplus of the amount of power generated by the power generation device and such that when the amount of power generated by the power generation device is smaller than the amount demanded by the load, the amount of power generated by the power generation device is supplied to the load and a deficit in the amount demanded by the load is discharged from the composite battery.

10. The composite battery system according to claim 7 or 8, further comprising a charger disposed outside the housing and having one end connected to the power line of the power generation device and another end connected to a grid via a charging switch, wherein
when the charging switch is in a charging position, the composite battery is charged with output power of the charger generated by power of the grid.

11. The composite battery system according to claim 10, further comprising a bidirectional DC-DC converter disposed outside the housing and having one end connected to the power line of the power generation device and another end connectable to an in-vehicle secondary battery mounted in an electric vehicle, wherein
the in-vehicle secondary battery has a function of being charged with the DC power generated by the power generation device and with the output power of the charger generated by the power of the grid, and a function of discharging power with which the in-vehicle secondary battery is charged to the power control system.

12. The composite battery system according to claim 7 or 8, further comprising a non-linkage switch that is disposed between a grid and the load and breaks linkage with the grid, wherein
when the non-linkage switch is in a non-linkage position, the control device performs control such that a demand of the load is satisfied with power generated by the power generation device and power charged in the composite battery.
